# EUROPÄISCHE PATENTANMELDUNG

(11) **EP 1 764 205 A1**
(43) Veröffentlichungstag der Anmeldung: **21.03.2007**
(21) Anmeldenummer: 06016163.5
(22) Anmeldetag: 02.08.2006
(51) Int. Cl.: B29C 45/17

(54) **Fluidinnendruckverfahren zur Herstellung von Urformteilen**

(30) Priorität: 16.09.2005 DE 102005044384
(71) Anmelder: MEKRA Lang GmbH & Co. KG, 90765 Fürth (DE)
(72) Erfinder: Lang, Werner, Dr., 91465 Ergersheim (DE); Meier, Markus, 91478 Markt Nordheim (DE)
(74) Vertreter: Winter, Brandl, Fürniss, Hübner Röss, Kaiser, Polte Partnerschaft Patent- und Rechtsanwaltskanzlei

(57) **Zusammenfassung**

Die vorliegende Erfindung betrifft ein zweistufiges Fluidinnendruckverfahren zur Herstellung von Urformteilen (1A, 2A), mit den Verfahrensschritten: Einfüllen einer plastisch verformbaren Masse (3) in eine erste Form bzw. Kavität (1), Einleiten eines Gas- oder Dampfvolumens (4) unter Druck in diese Masse zur Bildung eines Hohlraumes und/oder Einleiten eines Flüssigkeitsvolumens (5) unter Druck in diesen Holraum, um diesen auszubilden oder weiter zu vergrößern und ein erstes Urformteil (1A) auszubilden. Überschüssiges plastisch verformbares Material wird durch das Gas- oder Dampfvolumen und/oder das Flüssigkeitsvolumen aus der ersten in eine zweite Form bzw. Kavität (2) verdrängt, um dort ein zweites Urformteil (2A) auszubilden.

## Beschreibung

Die vorliegende Erfindung betrifft ein zweistufiges Fluidinnendruckverfahren zur Herstellung von Urformteilen, insbesondere zur Herstellung von Kraftfahrzeugspiegeln oder Teilen davon, sowie eine Vorrichtung zur Durchführung eines solchen Verfahrens.

Zur Herstellung von insbesondere dünnwandigen Urformteilen wie beispielsweise Gehäusen, Trägern oder Gelenken von Kraftfahrzeugspiegeln sind Fluidinnendruckverfahren bekannt. Bei diesen wird zunächst eine plastisch verformbare Masse, beispielsweise thermoplastischer heißer Kunststoff in einen geschlossenen Hohlraum einer Gussform eingefüllt. Anschließend wird ein Fluidvolumen unter Druck in diesen Hohlraum eingebracht, welches die verformbare Masse an die Innenwandung der Form anpresst und im Inneren einen Hohlraum schafft, so dass nach Verfestigung der verformbaren Masse ein dünnwandiges Urformteil entnommen werden kann.

Zur Kühlung der Form und damit zur Verkürzung der Zykluszeiten schlägt die DE 199 29 700 A1 ein gattungsgemäßes zweistufiges Fluidinnendruckverfahren vor, bei dem zunächst unter Druck ein Gasvolumen zur Ausbildung des Hohlraums eingebracht, dieses anschließend entfernt und durch unter Druck stehendes Flüssigkeitsvolumen ersetzt wird. Da zum Aufbau eines ausreichenden Gegendrucks die Form während des Einbringens des Gases geschlossen bleiben muss, ist es notwendig, ab initio die dem fertigen Urformteil entsprechende Menge verformbarer Masse einzufüllen. Die Berücksichtigung von Schwundmaßen, Angußteilen, Wandstärken und dergleichen erfordert dabei in der Regel ein empirisches Einstellen dieser Menge, was nicht nur die jeweilige (Wieder)Anlaufzeit des Herstellungsprozesses verlängert, sondern auch unnötig Material verschwendet.

Hierzu schlägt die nicht vorveröffentlichte deutsche Patentanmeldung mit dem Aktenzeichen 10 2004 020 579.5 vor, ein Reservoir vorzusehen, in welches überschüssiges Material entweichen kann. Das überschüssige Material ist verloren, was momentan zweistufige Fluidinnendruckverfahren noch unwirtschaftlich macht. Denn aufgrund der dünnen Wandstärken und zum Teil großen Hohlräume geht bei jedem Herstellungsvorgang das gesamte überschüssige verdrängte Material verloren.

Alternativ schlägt die DE 195 18 963 A1, die eine einstufiges reines Gasinnendruckverfahren betrifft, vor, die überschüssige, noch schmelzfähige Masse in die Plastifiziereinheit zurückzudrängen, wo sie erneut zur Herstellung weiterer Urformteile bereitsteht. Diese Restmasse wäre jedoch bei dem in der DE 199 29 700 A1 beschriebenen zweistufigen Verfahren aufgrund des kühlendes Flüssigkeitsvolumens in der Form bereits teilweise erkaltet, so dass sich durch die Re-Plastifizierung und erneute Verwendung unerwünschte Phasenumwandlungen, Lunker- oder Einsprengselbildungen ergäben, in denen nicht vollständig re-plastifiziertes oder mehrfach re-plastifiziertes Material zu Inhomogenitäten der nachfolgenden Werkstücke führen könnten.

Die DE 43 36 243 C2, die als nächstkommender Stand der Technik angesehen wird, lehrt, Kunststoff in eine Form einzufüllen, wobei vorzugsweise aus einer gemeinsamen Düse auch Gas oder Fluid eingefüllt werden, um einen Hohlraum zu bilden. Durch das Gas wird das überschüssige Material in eine zweite Kavität verdrängt, in der ein zweites Urformteil gebildet wird.

Die DE 100 52 285 A1 offenbart ein zweistufiges Verfahren unter Einfüllen einer verformbaren Masse und Einleiten eines Gas- oder Dampfvolumens. Die Druckschrift sagt jedoch nichts über die Weiterverwertung des verdrängten Materials aus.

Die DE 43 00 397 A1 ist als Stand der Technik bereits in der vorstehend genannten nächstkommenden Druckschrift DE 43 36 243 C2 erwähnt. Sie zeigt eine Spritzgussvorrichtung und ein -verfahren, wobei der aus der Kavität in ein Reservoir verschobene Kunststoff als "Anhängsel", beispielsweise als Griff, oder als eigener Gegenstand dienen kann.

Aufgabe der vorliegenden Erfindung ist es daher, das aus der DE 43 36 243 C2 bekannte zweistufige Fluidinnendruckverfahren dahingehend weiterzubilden, dass es wirtschaftlicher arbeitet, wobei im Gegensatz zum aus der DE 195 18 963 A1 bekannten Verfahren das Ausgangsmaterial nur einmal plastifiziert werden muss, um die bei mehrmaliger Re-plastifizierung auftretenden Beeinträchtigungen zu vermeiden.

Eine weitere Aufgabe ist es, eine Vorrichtung zur Durchführung eines solchen Verfahrens anzugeben.

Diese Aufgabe wird durch ein Verfahren nach einem der Ansprüche 1 oder 2 und eine Vorrichtung nach einem der Ansprüche 8 oder 9 gelöst.

Ein erfindungsgemäßes zweistufiges Fluidinnendruckverfahren umfasst in an sich bekannter Weise die Verfahrensschritten: Einfüllen einer plastisch verformbaren Masse in eine erste Form bzw. Kavität, Einleiten eines Gas- oder Dampfvolumens unter Druck in diese Masse zur Bildung eines Hohlraumes, und Einleiten eines Flüssigkeitsvolumens unter Druck in diesen Holraum, um diesen weiter zu vergrößern und ein erstes Urformteil auszubilden.

Das überschüssige plastisch verformbare Material wird erfindungsgemäß nicht als Abfall in ein Reservoir ab- oder zur Wiederverwertung in die Plastifiziereinheit zurückgeführt, sondern durch das Gas- oder Dampfvolumen und/oder das Flüssigkeitsvolumen aus der ersten in eine zweite Form bzw. Kavität verdrängt, um dort ein zweites Urformteil auszubilden.

Damit ist es vorteilhaft möglich, das bisher verlorene Material bei einem zweistufigen Fluidinnendruckverfahren nutzbringend zur Ausbildung eines zweiten Urformteils zu verwenden, ohne dass dieses Material hierzu re-plastifiziert werden müsste. Dies spart darüber hinaus Energie, die andernfalls zum Wiedererwärmen des Materials notwendig wäre. Ingesamt wird damit ein Verfahren zur Verfügung gestellt, mit dem erstmals zweistufige Fluidinnendruckverfahren effektiv und wirtschaftlich einsetzbar sind.

Als plastisch verformbare Masse wird bevorzugt eine thermoplastische Kunststoffschmelze verwendet, als Flüssigkeitsvolumen Wasser.

Während des Einfüllens der plastisch verformbaren Masse in die erste Form bzw. Kavität und/oder während des Einleitens des Gas- oder Dampfvolumens in die erste Form bzw. Kavität kann diese im übrigen vollständig abgeschlossen und insbesondere von der zweiten Form bzw. Kavität getrennt sein oder mit der zweiten Form bzw. Kavität kommunizieren. Die vorliegende Erfindung umfasst daher folgende Möglichkeiten:
- die erste Form bzw. Kavität ist zunächst während des Einfüllens der plastisch verformbaren Masse und/oder dem anschließenden Einleiten des Gas- oder Dampfvolumen abgeschlossen. Dies ermöglicht vorteilhaft eine schnelle Befüllung der ersten Form bzw. ein schnelles Ausbilden des Hohlraumes, da die Masse nicht bereits teilweise aus der ersten Form entweicht und der Druck des Gas- oder Dampfvolumens die plastisch verformbare Masse gleichmäßig gegen die Innenwandung der ersten Form drückt. Erst, nachdem die erste Form befüllt und/oder der Hohlraum in der ersten Form durch das Gas- oder Dampfvolumen ausgebildet ist, wird eine Verbindung mit der zweiten Form hergestellt. Durch das anschließend eingeleitete Flüssigkeitsvolumen wird gleichermaßen der Hohlraum in der ersten Form vergrößert und damit das erste Urformteil vollständig ausgebildet, wie auch die überschüssige plastisch verformbare Masse in die zweite Form ausgeschoben, in der sie das zweite Urformteil ausbildet. Besonders vorteilhaft kommunizieren erste und zweite Form nur während des Einfüllens der Masse, so dass in der ersten Form vorhandene Luft in die zweite Form und aus dieser in die Umgebung verdrängt werden kann. Anschließend trennt man die Verbindung, so dass das Gas- oder Dampfvolumen rasch einen Hohlraum schafft, ohne dass der Druck in die zweite Form entweichen kann;
- erste und zweite Form kommunizieren durchgehend. In diese Fall wird zunächst die plastisch verformbare Masse in die erste Form eingefüllt und bereits dabei oder erst durch das anschließend eingeleitete Gas- oder Dampfvolumen überschüssige Masse, die nicht zur Ausbildung des ersten Urformteils notwendig ist, in die zweite Form verdrängt. Durch das anschließend eingeleitete Flüssigkeitsvolumen wird die restliche überschüssige Masse ausgeschoben und das erste und zweite Urformteil vollständig ausgebildet. Vorteilhaft ist dabei keine zusätzliche Sperrvorrichtung und die entsprechende aufwändige Steuerung zwischen erster und zweiter Form notwendig.
- erste und zweite Form kommunizieren anfangs miteinander und plastisch verformabres Material wird durch eingeleitetes Gas- oder Dampfvolumen von der ersten in die zweite Form verdrängt. Anschließend wird die Verbindung getrennt und das Flüssigkeitsvolumen bewirkt nur noch eine Vergrößerung des Hohlraums in der ersten Form, beaufschlagt jedoch nicht mehr die zweite Form.

Die Verbindung zwischen erster und zweiter Form ist vorteilhaft entsprechend der zu verarbeitenden plastisch verformbaren Masse ausgebildet. Insbesondere kann sie derart ausgebildet sein, dass die Masse nur unter Druck von der ersten in die zweite Form ausgeschoben werden kann. Gleichermaßen kann sie regelbar sein, so dass beispielsweise während des Einleitens des Gas- oder Dampfvolumens zunehmend Masse in die zweite Form verdrängt wird.

Nach einer Ausführungsform der Erfindung wird als zweites Urformteil ein Strangpressteil ausgebildet werden. Dieses kann kontinuierlich aus der ausgeschobenen überschüssigen plastisch verformbaren Masse hergestellt werden, wobei sich die Länge des Strangpressteils je nach Überschuss ergibt. Dies hat den Vorteil, dass die insgesamt eingefüllte plastisch verformbare Masse nur sehr grob vorab bestimmt werden muss. Des weiteren kann ein solches Strangpressteil auch dickere Wandstärken und geringere Qualität als das erste Urformteil aufweisen, so dass zur Herstellung des Strangpressteils auch die sich bereits verfestigende ausgeschobene Masse verwendbar ist.

Alternativ kann auch das zweite Urformteil mittels Fluidinnendruckverfahren hergestellt werden, indem in die zweite Form separat ein Gas- oder Dampfvolumen und/oder ein Flüssigkeitsvolumen eingeleitet wird, um in der zweiten Form einen weiteren Hohlraum auszubilden bzw. zu vergrößern. In diesem Fall ist es vorteilhaft, ein an sich bekanntes Reservoir mit der zweiten Form zu verbinden, in das Restmaterial abgeführt werden kann.

Um die plastische Verformbarkeit während der Ausbildung beider Urformteile zu gewährleisten, wird dem überschüssigen Material, das aus der ersten Form ausgeschoben wird, nach einer weiteren Ausgestaltung der Erfindung beispielsweise in der Verbindung zwischen erster und zweiter Form Wärme zugeführt.

Weitere Aufgaben, Vorteile und Merkmale der vorliegenden Erfindung ergeben sich aus den Unteransprüchen und den Ausführungsbeispielen. Hierzu zeigt:
Fig. 1 eine Vorrichtung zur Durchführung eines erfindungsgemäßen Verfahrens nach dem Einfüllen der plastisch verformbaren Masse;
Fig. 2. die Vorrichtung aus Fig. 1 beim Einleiten des Gasvolumens;
Fig. 3 die Vorrichtung aus Fig. 1 beim Einleiten des Flüssigkeitsvolumens; und
Fig. 4 die Vorrichtung nach Anspruch 1 mit fertig ausgebildetem ersten und zweiten Urformteil.

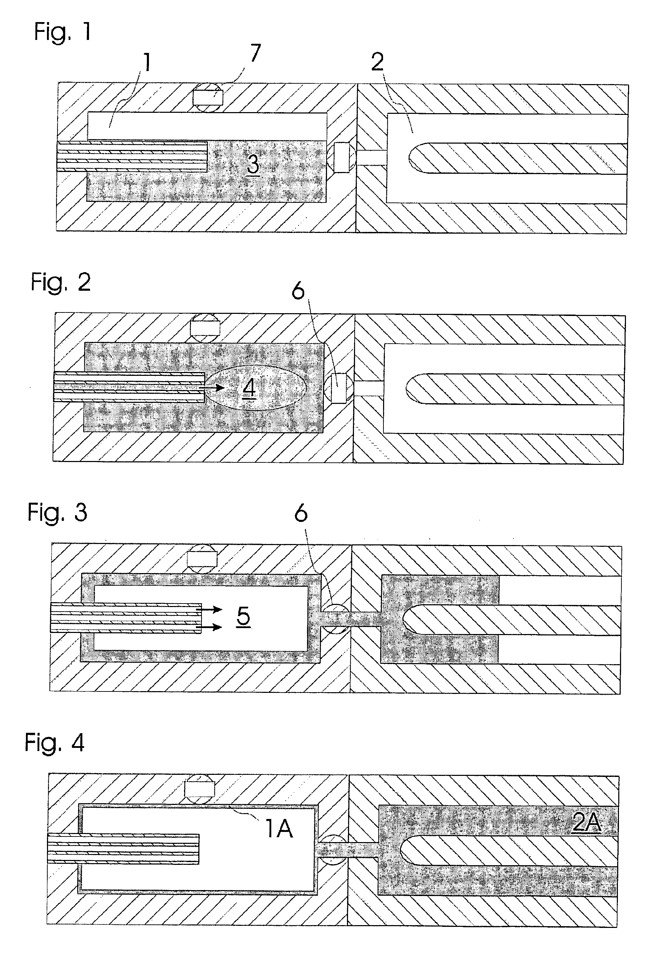

Fig. 1 zeigt schematisch eine Vorrichtung zur Durchführung eines erfindungsgemäßen Verfahrens. Diese umfasst eine erste Form bzw. Kavität 1 und eine zweite Form bzw. Kavität 2. In der vorliegende beschriebenen Ausführung können beide Formen durch eine Sperrvorrichtung 6 voneinander getrennt werden. In einer anderen, hier nicht gezeigten Ausführung, die im übrigen der nachfolgend beschrieben Ausführung entspricht, kommunizieren beide Formen 1, 2 stets miteinander - man kann sich hierzu die Sperrvorrichtung 6 als stets offen geschaltet denken.

In die erste Form 1 ist bereits durch eine nunmehr und während des weiteren Verfahrens geschlossene Zuführeinrichtung 7 eine plastisch verformbare Masse, im Ausführungsbeispiel thermoplastische Kunststoffschmelze 3 zugeführt. Diese füllt im gezeigte Beispiel die erste Form 1 nicht vollständig aus - eine vollständige Befüllung ist jedoch gleichermaßen möglich.

Im zweiten, in Fig. 2 dargestellten Verfahrensschritt wird ein Gasvolumen 4 (in Fig. 2 hellgrau) durch eine entsprechende Zuleitung eingeleitet. Im Ausführungsbeispiel handelt es sich um Stickstoff unter Überdruck. Anstelle eines Gas- kann auch ein Dampfvolumen verwendet werden.

Hierdurch wird die plastisch verformbare Masse 3 gleichmäßig gegen die komplette Innenwandung der erste Form 1 gepresst und ein mit Gasvolumen gefüllter Hohlraum 4 entsteht. Im gezeigten Ausführungsbeispiel bleibt die Sperrvorrichtung 6 während dieses Verfahrensschrittes geschlossen. Da die erste Form ursprünglich nur teilweise gefüllt war, kann die Masse 3 zunächst unter Verdrängung der Umgebungsluft, die noch in der ersten Form vorhanden war, vom Gasvolumen 4 verdrängt werden. Hierzu weist die erste Form entsprechende Ausläße auf (nicht dargestellt). In der nicht dargestellten alternativen Ausführung mit kommunizierenden Formen kann diese Luft und die Masse bereits teilweise in die zweite Form 2 verdrängt werden. Vorteilhaft sind dann keine zusätzlichen Ausläße nötig.

Im dritten, in Fig. 3 gezeigten Verfahrensschritt wird, nachdem das Gasvolumen 4 abgesaugt worden ist, Flüssigkeitsvolumen 5 in den entstandenen Hohlraum eingeführt und zugleich die Sperrvorrichtung 6 geöffnet. Das unter Druck stehende Flüssigkeitsvolumen 5 erweitert den Hohlraum in der ersten Form, verdrängt weitere überschüssige Masse in die zweite Form 2 und kühlt gleichzeitig die in der ersten Form vorhandene Masse 3 ab, so dass das erste Urformteil 1A ausgebildet wird.

In der nicht dargestellten alternativen Ausführung verdrängt das zugeführte Flüssigkeitsvolumen noch weiter überschüssige Masse 3 in die zweite Form.

Die zweite Form 2, in die die überschüssige Masse 3 verdrängt wird, formt diese zu einem Strangpressteil 2A von theoretisch endloser Länge, je nach Überschuss der Masse 3.

Da die thermoplastische Kunststoffschmelze 3 bereits durch das Wasser 5 stark abgekühlt wird, können sowohl erstes als auch zweites Urformteil 1A, 2A rasch entnommen werden, was vorteilhaft die Zykluszeiten senkt. Da das überschüssige Material, das aus dem Innenraum der ersten Form 1 verdrängt wird (und bei dünnwandigen ersten Urformteilen erhebliche Mengen aufweisen kann), komplett zur Herstellung des endlosen Strangpressteils 2A weiterverwendet wird, geht kaum noch Material verloren.

Dass das plastisch verformbare Material 3 bei Verdrängung in die zweite Form 2 bereits teilweise verfestigt bzw. abgekühlt ist, ist bei Herstellung eines dickwandigeren Strangpressteils besonders unproblematisch. Bevorzugt kann jedoch beispielsweise die Verbindung 6 zwischen erster und zweiter Form geheizt werden, so dass dem verdrängten überschüssigen Material Wärme zugeführt und die Verfestigung verlangsamt oder gar rückgängig gemacht wird.

Eine Ausführung der vorliegenden Erfindung betrifft ein zweistufiges Fluidinnendruckverfahren zur Herstellung von Urformteilen (1A, 2A), mit den Verfahrensschritten: Einfüllen einer plastisch verformbaren Masse (3) in eine erste Form bzw. Kavität (1), Einleiten eines Gas- oder Dampfvolumens (4) unter Druck in diese Masse zur Bildung eines Hohlraumes und/oder Einleiten eines Flüssigkeitsvolumens (5) unter Druck in diesen Holraum, um diesen auszubilden oder weiter zu vergrößern und ein erstes Urformteil (1A) auszubilden. Überschüssiges plastisch verformbares Material wird durch das Gas- oder Dampfvolumen und/oder das Flüssigkeitsvolumen aus der ersten in eine zweite Form bzw. Kavität (2) verdrängt, um dort ein zweites Urformteil (2A) auszubilden.

## Patentansprüche

1. Zweistufiges Fluidinnendruckverfahren zur Herstellung von Urformteilen (1A, 2A), mit den Verfahrensschritten:
Einfüllen einer plastisch verformbaren Masse (3) in eine erste Kavität (1);
Einleiten eines Gas- oder Dampfvolumens (4) unter Druck in diese Masse zur Bildung eines Hohlraumes;
Einleiten eines Flüssigkeitsvolumens (5) unter Druck in diesen Hohlraum, um diesen weiter zu vergrößern und ein erstes Urformteil (1A) auszubilden,
wobei
überschüssiges plastisch verformbares Material durch das Gas- oder Dampfvolumen und/oder das Flüssigkeitsvolumen aus der ersten in eine zweite Kavität (2) verdrängt wird, um dort ein zweites Urformteil (2A) auszubilden, **dadurch gekennzeichnet, dass**
das zweite Urformteil ein Strangpressteil ist.

2. Zweistufiges Fluidinnendruckverfahren zur Herstellung von Urformteilen (1A, 2A), mit den Verfahrensschritten:
Einfüllen einer plastisch verformbaren Masse (3) in eine erste Kavität (1); Einleiten eines Gas- oder Dampfvolumens (4) unter Druck in diese Masse zur Bildung eines Hohlraumes;
Einleiten eines Flüssigkeitsvolumens (5) unter Druck in diesen Hohlraum, um diesen weiter zu vergrößern und ein erstes Urformteil (1A) auszubilden, wobei überschüssiges plastisch verformbares Material durch das Gas- oder Dampfvolumen und/oder das Flüssigkeitsvolumen aus der ersten in eine zweite Kavität (2) verdrängt wird, um dort ein zweites Urformteil (2A) auszubilden, **dadurch gekennzeichnet, dass** dem überschüssigen plastisch verformbaren Material, das aus der ersten Kavität verdrängt wird, Wärme zugeführt wird.

3. Zweistufiges Fluidinnendruckverfahren nach Anspruch 1 oder 2, **dadurch gekennzeichnet, dass** die plastisch verformbare Masse (3) thermoplastische Kunststoffschmelze umfasst.

4. Zweistufiges Fluidinnendruckverfahren nach einem der vorigen Ansprüche, **dadurch gekennzeichnet, dass** während des Einfüllens der plastisch verformbaren Masse in die erste Kavität und/oder während des Einleitens des Gas- oder Dampfvolumens in die erste Kavität diese im übrigen vollständig abgeschlossen und insbesondere von der zweiten Kavität getrennt ist.

5. Zweistufiges Fluidinnendruckverfahren nach einem der Ansprüche 1 bis 3, **dadurch gekennzeichnet, dass** während des Einfüllens der plastisch verformbaren Masse in die erste Kavität und/oder während des Einleitens des Gas- oder Dampfvolumens in die erste Kavität (1) diese mit der zweiten Kavität (2) kommuniziert.

6. Zweistufiges Fluidinnendruckverfahren nach einem der vorigen Ansprüche, **dadurch gekennzeichnet, dass** in die zweite Kavität separate ein Gas- oder Dampfvolumen und/oder ein Flüssigkeitsvolumen eingeleitet wird, um in der zweiten Kavität einen weiteren Hohlraum auszubilden bzw. zu vergrößern.

7. Zweistufiges Fluidinnendruckverfahren nach einem der vorigen Ansprüche, **dadurch gekennzeichnet, dass** das Flüssigkeitsvolumen (5) Wasser umfasst.

8. Vorrichtung zur Durchführung eines zweistufiges Fluidinnendruckverfahrens nach einem der vorigen Ansprüche, mit
einer ersten Kavität (1) zur Herstellung eines ersten Urformteils (1A);
einem Mittel (7) zum Einfüllen einer plastisch verformbaren Masse (3) in die erste Kavität (1);
einem Mittel zum Einleiten eines Gas- oder Dampfvolumens (4) unter Druck in diese Masse zur Bildung eines Hohlraumes;
einem Mittel zum Einleiten eines Flüssigkeitsvolumens (5) unter Druck in diesen Holraum, um diesen weiter zu vergrößern und das erste Urformteil (1A) auszubilden,
**dadurch gekennzeichnet, dass** die Vorrichtung weiter umfasst:
eine zweite Kavität (2) zur Herstellung eines zweiten Urformteils (2A), wobei die zweite Kavität zumindest zeitweise mit der ersten Kavität derart kommunizieren kann, dass überschüssiges plastisch verformbares Material durch das Gas- oder Dampfvolumen und/oder das Flüssigkeitsvolumen aus der ersten in eine zweite Kavität (2) verdrängt wird, um dort das zweite Urformteil (2A) auszubilden.
